(19) Europäisches Patentamt / European Patent Office / Office européen des brevets

(11) **EP 1 983 305 B1**

(12) **FASCICULE DE BREVET EUROPEEN**

(45) Date de publication et mention
de la délivrance du brevet:
**27.06.2012 Bulletin 2012/26**

(51) Int Cl.:
*G08C 17/00* (2006.01)          *E02F 3/42* (2006.01)
*E02F 3/43* (2006.01)          *G01D 5/00* (2006.01)
*E02F 3/28* (2006.01)

(21) Numéro de dépôt: **08290381.6**

(22) Date de dépôt: **18.04.2008**

(54) **Capteur autonome de position et système de détermination de position d'un outil d'engin de travaux via des capteurs de position**

Autonomer Positionsmelder und System zur Bestimmung der Position eines Werkzeugs einer Arbeitsmaschine mit Hilfe von Positionsmeldern

Independent position sensor and system for determining the position of a work engine tool by means of position sensors

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.04.2007 FR 0702888**

(43) Date de publication de la demande:
**22.10.2008 Bulletin 2008/43**

(73) Titulaire: **Agatec**
**78600 Le Mesnil Le Roi (FR)**

(72) Inventeurs:
• **Chiorean, Dumitru Mircea**
**78600 Le Mesnil Le Roi (FR)**
• **Bonetti, Gianmarco**
**Castello Sopra Ticino (IT)**
• **Gamal, Albert**
**78600 Le Mesnil Le Roi (FR)**

(74) Mandataire: Debay, Yves
**Cabinet Debay**
**126 Elysée 2**
**78170 La Celle Saint Cloud (FR)**

(56) Documents cités:
DE-A1- 4 335 479          FR-A- 2 620 148
US-A- 4 489 306          US-A- 4 491 927
US-A- 5 140 933          US-A- 5 848 485
US-A1- 2004 139 803          US-A1- 2006 085 118
US-A1- 2006 243 180          US-B1- 6 336 077
US-B1- 6 609 315

**Description**

DOMAINE TECHNIQUE DE L'INVENTION

La présente invention concerne des dispositifs indicateurs de positionnement dans le domaine du contrôle d'outils d'excavation ou outils analogues articulés sur le bras d'un engin de travaux. L'invention concerne plus particulièrement un dispositif détecteur de position angulaire pour équiper un organe articulé d'un engin de travaux, ainsi qu'un système de détermination de la position d'un outil monté sur un bras articulé d'un engin de travaux. L'invention concerne également un engin d'excavation permettant de contrôler la géométrie et la position de l'ensemble godet-bras de godet.

ARRIERE-PLAN TECHNOLOGIQUE DE L'INVENTION

Il est connu dans l'art antérieur, par exemple par les documents US 4 491 927, US 5 848 485, US 6 336 077, US 6 609 315 ou FR 2 620 148, de nombreux systèmes pour commander la position d'un outil placé à l'extrémité d'un bras articulé, utilisant des capteurs inclinomètres communiquant avec une unité de traitement électronique centralisée (généralement installée dans la cabine de pilotage).

Il est également connu, par le document US 2006/243180, un système pour classer une opération exécutée par un engin de travaux. Le système peut comprendre des capteurs câblés ou non disposés sur l'engin. Chaque capteur étant configuré pour détecter un ou plusieurs paramètres associés avec l'engin. De plus, le système peut comprendre une mémoire mémorisant des données de classification associées avec différents types d'opérations exécutables par l'engin. Le système peut comprendre aussi un processeur configuré pour recevoir un signal indicatif d'au moins un paramètre détecté et classer un fonctionnement d'un engin dans au moins un des types différents d'opérations exécutables par l'engin en fonction du signal reçu et des données de classification mémorisées.

Le document US 2006/085118 propose également un engin d'excavation comprenant un bras, un godet, un câble de levage à partir duquel le godet est suspendu du bras, et un câble tracteur pour tracter le godet. Les moyens techniques sont utilisés pour fournir des données sur l'alignement, selon un plan vertical contenant l'axe du bras d'au moins un des composants de l'engin. Ces données peuvent être entrées par une interface homme-machine par laquelle l'étape de contrôle est effectuée par un opérateur, et/ou elle peut être entrée par des moyens pour contrôler la commande du câble de levage et/ou du câble tracteur de façon à diminuer ou arrêter ladite commande en réponse au mauvais alignement détecté desdits composants de l'engin.

Le document DE 43 35 479, propose un procédé de détection de l'inclinaison basé sur l'utilisation d'une cellule de mesure montée sur un outil d'excavation. L'inclinaison est mesurée en continu dans les directions X et Y par la cellule de mesure. L'information est mémorisée et transférée sans fil à une station de base qui met en rapport la donnée à la profondeur mesurée de l'outil. La combinaison de données est représentée dans un dispositif central de contrôle de données et est soumise à un ordinateur d'évaluation. La donnée mémorisée dans la cellule de mesure est transférée à la station de base quand la cellule passe par un point nul absolu.

Le contrôle de la profondeur réelle de creusement par l'outil est une aide très appréciable dans le domaine de l'excavation. Une précision et une rapidité de creusement peuvent être obtenues, même dans des conditions difficiles de visibilité. Cependant, un inconvénient de ces systèmes est l'arrachement des câbles reliant les capteurs à l'unité de traitement. Après la rupture d'un câble, le système est inopérant car on ne plus recueillir de signaux de position du ou des capteurs. Il est donc nécessaire avec de tels systèmes de prévoir des câbles de rechange et les opérateurs doivent perdre du temps à remplacer les câbles.

Des gaines de protection résistantes peuvent être aussi utilisées pour recouvrir les câbles ou connexions électriques, de façon à limiter les cas d'arrachement. Toutefois, l'utilisation de gaines de protection résistantes (en acier inoxydable) n'empêche pas l'arrachement des câbles dans des conditions de creusement difficiles.

Un autre inconvénient des systèmes existants est qu'il faut passer au minimum une demi-journée à installer l'ensemble de capteurs. Il est en effet nécessaire de fixer par exemple par des vis le ou les capteurs sur une position précise du bras (par exemple au niveau d'une plaque soudée sur le bras). Les gaines de protection, les câbles d'alimentation électrique des capteurs et les câbles de communication des signaux de position générés par les capteurs doivent également être fixés convenablement. L'installation de ces câbles (avec ou sans gaines) fait également perdre du temps. Il existe donc un besoin pour des systèmes plus rapides d'installation et robustes pour résister aux conditions sévères d'utilisation.

Le document US 2004/0139803 enseigne un capteur de vibrations multi-axes pouvant être fixé magnétiquement sur un dispositif vibrant dont on veut mesurer les vibrations. Ce capteur possède toujours l'inconvénient d'avoir la nécessité d'avoir un connecteur filaire pour transmettre ses signaux. En outre, il ne peut être disposé sur n'importe quelle surface du dispositif vibrant car un patin est nécessaire pour le placer.

DESCRIPTION GENERALE DE L'INVENTION

La présente invention a donc pour objet de pallier un ou plusieurs des inconvénients de l'art antérieur en définissant un dispositif détecteur de position angulaire pratique à installer sur un organe articulé d'un engin de travaux, tout en restant précis, fiable et résistant à des conditions extrêmes d'utilisation.

Cet objectif est atteint par un dispositif détecteur de position angulaire pour équiper un organe articulé d'un engin de travaux, comportant au moins une face d'accolage dotée d'éléments de fixation permettant de maintenir la face d'accolage accolée contre une surface plane en mouvement de l'organe, un module de communication par ondes électromagnétiques pour envoyer des informations vers un récepteur d'un appareil de contrôle distant, caractérisé en ce que le dispositif loge sous au moins une coque ou enveloppe solidaire de la face d'accolage :

- une source d'alimentation électrique autonome,
- une unité de traitement,
- un module électronique détecteur de position,

et en ce que le module électronique détecteur de position comprend au moins un capteur de position angulaire pour fournir des données de position angulaire à l'unité de traitement, le module de communication comportant un émetteur à interface sans fil connecté à l'unité de traitement pour envoyer à distance vers l'appareil de contrôle les données de position angulaire dans un signal d'émission.

Ainsi, il est permis avec ce type de dispositif détecteur d'éliminer les câbles et d'équiper rapidement un engin de travaux avec un système de contrôle de mouvements de l'engin. Le dispositif peut simplement être posé et accolé sur son support. L'utilisateur peut par exemple tenir dans une seule main le dispositif autonome lors de la pose. De plus, l'alimentation électrique autonome, c'est-à-dire rechargeable in situ, permet d'éviter des manipulations et les pertes de temps lorsque l'on dispose seulement d'accumulateurs passifs.

Selon l'invention, les éléments de fixation de la face d'accolage sont des éléments de fixation amovibles et dépourvus de vis pour être fixés manuellement sans l'aide d'outils.

La face d'accolage est aplatie et les éléments de fixation comprennent au moins un aimant.

Ainsi, grâce à la face d'accolage, on est assuré que le dispositif détecteur va être placé rapidement et précisément dans un plan perpendiculaire aux axes d'articulation. Les données de position angulaire seront donc d'autant plus précises.

Selon une autre particularité, l'émetteur à interface sans fil du module de communication transmet dans le signal d'émission un identifiant propre au dispositif.

Ainsi, l'organe articulé recevant le détecteur peut être identifié via l'identifiant fourni par le signal d'émission. Cette identification peut être automatique et économiser un temps précieux à l'opérateur. Naturellement, d'autres options d'identification de détecteurs peuvent être mises en oeuvre. Par exemple, les données angulaires peuvent être envoyées dans des messages sans identifiant : une synchronisation déclenchée par un équipement en cabine de pilotage permet dans ce cas d'obtenir les informations d'identification en considérant l'ordre de réception.

Selon une autre particularité, la source d'alimentation électrique autonome comprend au moins une batterie chargée par des cellules photovoltaïques.

Selon une autre particularité, les cellules photovoltaïques sont montées sur au moins un panneau à l'opposé de la face d'accolage.

Ainsi, l'alimentation électrique provient d'une création d'énergie locale (à l'intérieur même du dispositif détecteur), par transformation en électricité d'une énergie naturelle disponible : l'énergie lumineuse.

Selon une autre particularité, l'ensemble des composants est embarqué au dos de la face d'accolage, les composants et des panneaux solaires associés étant recouverts d'une coque de protection transparente.

L'utilisation de panneaux solaires, protégés sous la coque, permet de se débarrasser de fils ou câbles d'alimentation et l'opérateur n'a pas besoin de détacher le dispositif pour recharger ou changer la batterie. Tout au plus, un lavage standard (typiquement en même temps que le lavage de l'engin de travaux) peut être effectué le cas échéant lorsque la coque du dispositif de détection est très sale.

Selon une autre particularité, chaque capteur de position angulaire est de type capteur accéléromètre.

Selon une autre particularité, les éléments de fixation de la face d'accolage peuvent comporter des cavités ou encoches de positionnement.

Un autre but de l'invention est d'apporter une réponse à un ou plusieurs des problèmes rencontrés dans l'art antérieur en définissant un système simple d'installation et fiable pour déterminer la position d'un godet ou outil de creusement à l'extrémité d'un bras d'engin de travaux.

Ce but est atteint par un système de détermination de la position d'un outil monté sur un bras articulé d'un engin de travaux, comprenant un appareil de contrôle et plusieurs dispositifs détecteurs de position selon la revendication 1, les dispositifs détecteurs étant répartis chacun sur différentes parties articulées de l'engin de travaux, l'appareil de contrôle comprenant :

- un récepteur de communication sans fil pour recevoir le signal d'émission,
- une interface utilisateur dotée d'un écran d'affichage, et
- un module de calcul d'une position de l'outil par utilisation des données de position angulaire issues de l'ensemble des dispositifs détecteurs.

Comme peut l'apprécier l'homme du métier, le module de communication et l'unité de traitement peuvent n'être qu'un seul appareil.

Selon une autre particularité, l'émetteur à interface sans fil du module de communication de chacun des dispositifs détecteurs transmet dans le signal d'émission un identifiant.

Selon une autre particularité, la source d'alimentation électrique autonome comprend au moins une batterie chargée par des cellules photovoltaïques.

Selon une autre particularité, la face d'accolage est aplatie et les éléments de fixation comprennent au moins un aimant.

Selon une autre particularité, le module de calcul compare en outre la position de l'outil calculée avec une profondeur de référence paramétrée via l'interface utilisateur pour déterminer une consigne d'ajustement vertical de l'outil, le module de calcul délivrant un signal représentatif de ladite consigne à destination de l'écran d'affichage.

Un autre but de l'invention est d'apporter une réponse à un ou plusieurs des problèmes rencontrés dans l'art antérieur en définissant un système simple d'installation et fiable pour déterminer la position d'un godet ou outil de creusement à l'extrémité d'un bras d'engin de travaux.

A cet effet l'invention propose également un engin d'excavation, comprenant un châssis, un bras de support attaché de façon pivotante sur le châssis, un bras de godet ayant une première extrémité et une deuxième extrémité, la première extrémité étant attachée de façon pivotante sur le bras de support, un outil de type godet attaché de façon pivotante sur la deuxième extrémité du bras de godet, et un système actionneur pour actionner via des signaux de commande le bras de support, le bras de godet et l'outil, caractérisé en ce qu'il comprend :

- trois dispositifs détecteurs de position angulaire selon la revendication 1, lesdits trois dispositifs étant répartis respectivement sur le bras de support, le bras de godet et l'outil ;
- une interface utilisateur pour permettre de commander le système actionneur ; et
- en liaison avec l'interface utilisateur, un appareil de contrôle doté d'un récepteur de communication sans fil pour recevoir des signaux d'émission délivrés par les émetteurs des trois dispositifs détecteurs.

Ainsi, on obtient un engin de travaux dépourvu de câbles et dont l'outil de creusement (ou outil analogue) peut être contrôlé avec une indication continue de sa position : il s'agit par exemple de sa position par rapport au point d'articulation du bras support sur le châssis de l'engin. Le risque d'une interruption du contrôle en raison d'un arrachement de câbles (d'alimentation et de signalement de position) est donc écarté. La transmission des données de position peut avantageusement être réalisée par des messages radio. Trois angles par rapport à un même plan de référence permettent de déterminer la position verticale de l'outil. En effet, il suffit par exemple de disposer des paramètres de calcul suivants : longueur de l'arbre de support, longueur de l'arbre de godet et longueur de l'outil ou godet, position de chaque détecteur sur chacun des organes respectifs et paramètres angulaires mesurés (angles et/ou variations d'angle).

Selon une autre particularité, l'émetteur à interface sans fil du module de communication de chacun des dispositifs détecteurs transmet dans le signal d'émission un identifiant, l'appareil de contrôle comprenant une table de correspondance pour associer à un organe articulé (parmi le bras de support, le bras de godet et l'outil) une position angulaire transmise dans le signal d'émission, cette association étant établie grâce à l'identifiant de dispositif détecteur transmis avec la position angulaire dans le signal d'émission.

Selon une autre particularité, les émetteurs et le récepteur utilisent des ondes radio à une fréquence déterminée.

Selon une autre particularité, l'appareil de contrôle comprend :

- une mémoire pour stocker un paramètre de profondeur de référence ;
- un module de calcul d'une consigne de mouvement vertical de l'outil par utilisation de données de position angulaire fournies par les trois dispositifs détecteurs et du paramètre de profondeur de référence ;
- une liaison avec un écran d'affichage de l'interface utilisateur pour fournir à cet écran d'affichage le résultat du calcul de consigne.

Ainsi, lorsqu'un paramètre de profondeur de référence est enregistré l'appareil de contrôle peut avantageusement permettre d'indiquer à l'écran s'il faut maintenir, rehausser ou abaisser la position du godet.

Selon une autre particularité, le bras de support ou le dispositif détecteur placé sur le bras de support est équipé d'un dispositif récepteur laser linéaire permettant de détecter le passage du récepteur laser linéaire à une hauteur définie par un plan laser de référence, le dispositif récepteur laser linéaire incluant un module de communication sans fil pour envoyer dans un signal d'émission des données de détection de faisceau laser à l'appareil de contrôle. Ceci peut permettre par exemple la détermination de l'angle du bras de support et un calibrage de l'ensemble.

Selon une autre particularité, le dispositif récepteur laser linéaire comprend au moins une cellule de réception linéaire incluant des photodiodes alignées.

L'invention, avec ses caractéristiques et avantages, ressortira plus clairement à la lecture de la description faite en référence aux dessins annexés donnés à titre d'exemples non limitatifs dans lesquels :

- la figure 1 représente une vue de côté et en transparence d'un dispositif sans fil détecteur de position angulaire selon l'invention,
- la figure 2 montre un engin de travaux équipé de dispositifs détecteurs sans câble et pouvant contrôler la position du godet conformément à l'invention,
- la figure 3 illustre un système selon l'invention de détermination de position, qui utilise la relation entre les angles détectés et la position verticale en profondeur du godet de l'engin de travaux,

- les figures 4A et 4B représentent respectivement une vue de dessus et une vue de dessous d'un dispositif sans fil détecteur de position angulaire selon l'invention,
- la figure 5 montre une vue du boîtier d'un appareil de contrôle utilisable selon l'invention en combinaison avec les dispositifs sans fil détecteurs de position angulaire,
- les figures 6A et 6B illustrent respectivement des mouvements du godet seul et du bras de godet seul pouvant permettre à un appareil de contrôle tel qu'illustré à la figure 5, lors d'une phase d'apprentissage, d'attribuer une position sur l'engin à un dispositif détecteur selon l'invention.

## DESCRIPTION DES MODES DE REALISATION PREFERES DE L'INVENTION

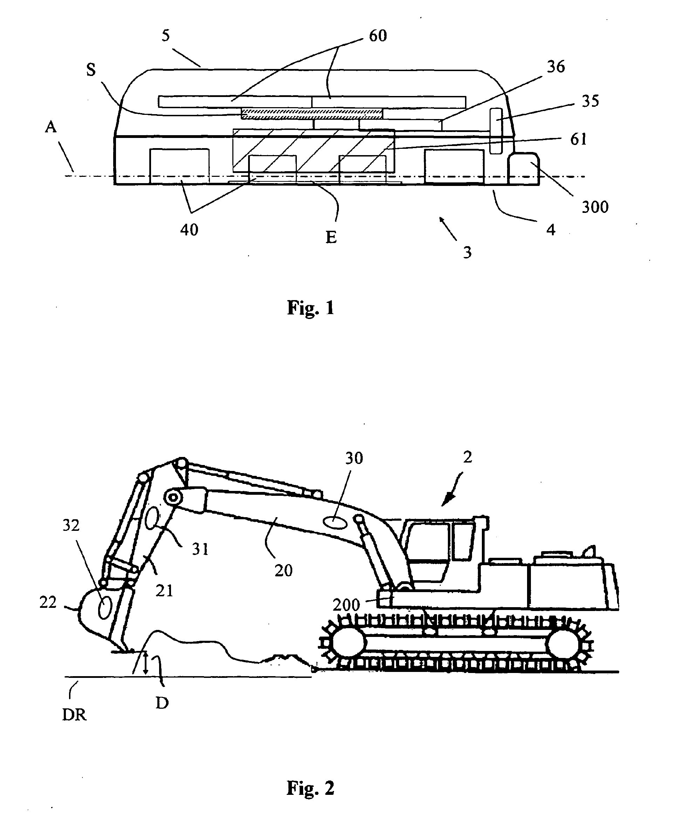

En référence aux figures 1 à 3, le système selon l'invention permet de recueillir des données de position relatives aux différents organes articulés d'un engin de travaux tel qu'une pelleteuse. Le système s'applique aux engins d'excavation (2) et plus généralement à tout engin nécessitant un contrôle de la profondeur d'un outil de travail. Dans ce qui suit et de manière non limitative, la description fait référence à un engin d'excavation (2).

Typiquement, ce type d'engin (2) comprend un châssis (200), un bras de support (20) attaché de façon pivotante sur le châssis (200), un bras de godet (21) ayant une première extrémité et une deuxième extrémité, la première extrémité étant attachée de façon pivotante sur le bras de support (20), un outil de type godet (22) attaché de façon pivotante sur la deuxième extrémité du bras de godet (21), et un système actionneur recevant des signaux de commande et permettant d'actionner le bras de support (20), le bras de godet (21) et l'outil (22). Les signaux de commande sont initiés via une interface utilisateur située de préférence dans une cabine de pilotage.

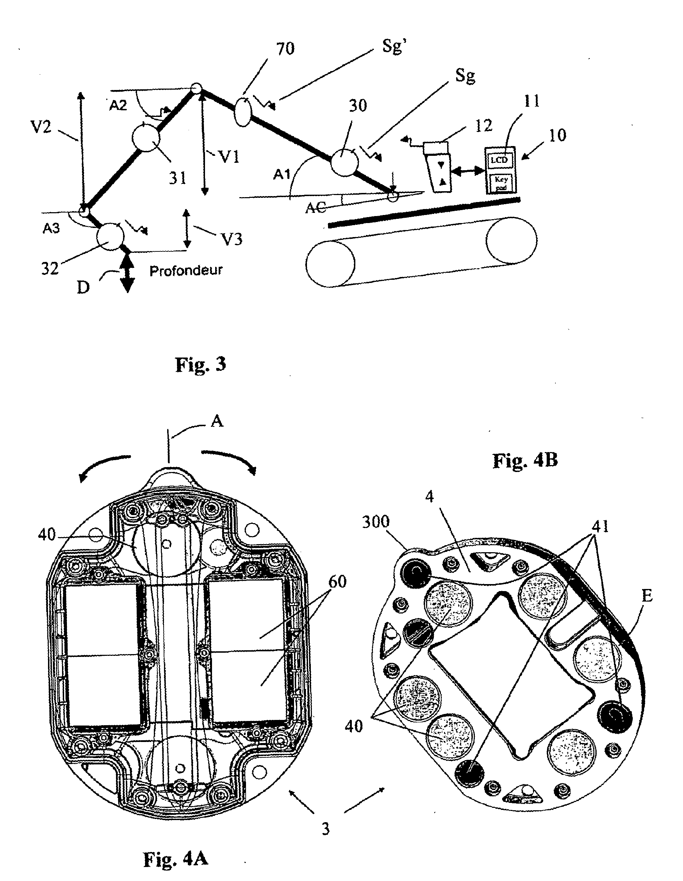

Selon l'invention, les données de position sont des données de position angulaire par rapport à un même plan ou direction de référence (par exemple la verticale). Ces données de position angulaire peuvent être générées par des modules électroniques à capteur (S) de position angulaire. Dans un mode de réalisation, chaque capteur (S) détermine sa position angulaire intrinsèque par rapport à la verticale comme illustré à la figure 4A. Pour s'affranchir de câbles, ces données de position angulaire sont avantageusement envoyées par les dispositifs détecteurs (30, 31, 32) à l'aide d'un émetteur à interface sans fil, par exemple dans un message radio. Un message radio se diffusant de façon omnidirectionnelle est préféré à un message IR (infra-rouge) qui nécessite un envoi directionnel de l'information. L'émission radio est de préférence réalisée pendant un temps d'émission réduit. Les temps d'émission peuvent être synchronisés entre eux pour les différents dispositifs (30, 31, 32). Cela permet une économie d'énergie. Les émetteurs et le récepteur utilisent par exemple des ondes radio à une fréquence déterminée. Toute autre communication à courte ou moyenne distance, sans fil, peut être utilisée.

La source (61) d'alimentation électrique est une source autonome pour éviter la présence de câbles. Par autonomie de la source, il faut comprendre indépendance vis-à-vis de quelconques sources d'alimentation électrique extérieures au dispositif (3). Le rechargement peut ainsi s'effectuer in situ. Dans l'exemple des figures 1 et 3, il s'agit d'une batterie chargée à l'aide d'un ou plusieurs panneaux solaires (60). Une ou plusieurs batteries peuvent être embarquées dans le dispositif (3) et chargées par des cellules photovoltaïques. Une telle source d'énergie est renouvelable et ne nécessite pas d'extraction de batterie pour le rechargement. Les cellules photovoltaïques sont orientées à l'opposé de la face d'accolage et peuvent être située sur une face de la coque (5) ou juste en dessous la coque (5) qui doit dans ce cas être transparente. Une batterie auxiliaire conventionnelle de faible capacité peut être prévue dans le dispositif pour suppléer pendant un temps réduit la batterie principale chargée via les panneaux solaires (60). Dans un mode de réalisation de l'invention, le dispositif détecteur de position angulaire (3) est mis en marche automatiquement à l'exposition à la lumière grâce aux panneaux solaires (60). Ceux-ci sont simplement séparés et protégés de l'extérieur par au moins une coque (5) ou enveloppe transparente.

On comprend donc que le dispositif (3) est autonome et peut être initialement monté de façon indépendante de tout autre équipement sur son support. Dans l'exemple des figures 1 et 3, les dispositifs détecteurs (30, 31, 32) sont ainsi tous interchangeables au départ, avant la phase d'apprentissage ou de paramétrage servant à spécialiser et identifier la position sur l'engin (2) de chacun de ces dispositifs (30, 31, 32). Pour permettre la spécialisation, l'émetteur à interface sans fil du module (35) de communication peut transmettre un identifiant spécifique qui va être mémorisé par l'appareil de contrôle (10). Cet identifiant est par exemple transmis dans le signal d'émission (Sg) tel qu'un message radio. L'appareil de contrôle (10) peut comporter une table de correspondance pour associer une position angulaire transmise dans le signal d'émission (Sg) à un des organes articulés de la pelle mécanique. Une synchronisation initiée depuis l'appareil de contrôle (10) peut aussi permettre de considérer l'ordre de réception des signaux et ainsi identifier l'origine de chacun des signaux d'émission (Sg).

Dans l'exemple de la figure 1, le dispositif détecteur (3) comporte au moins une face d'accolage (4) qui est dotée d'éléments de fixation (40, 41) sur les organes (20, 21, 22) de l'engin d'excavation (2). Ces éléments de fixation (40, 41) assurent un maintien de la face d'accolage (4) accolée contre la surface plane en mouvement de chaque organe articulé. Comme illustré dans les figures 1, 4A et 4B, les éléments de fixation (40, 41) de la face d'accolage (4) sont des éléments permettant une fixation amovible. Le dispositif (3) peut aisément être positionné, enlevé et repositionné car il est simplement aimanté sur son support. Six aimants sont illustrés sur le dispositif (3) de la figure 4B. Plus généralement, les éléments de fixation (40, 41) sont dépourvus de vis pour être fixés manuellement sans l'aide d'outils. L'enlèvement peut être facilité par la présence d'une ou plusieurs encoche(s) (E) du côté de la face d'accolage (4), au niveau d'un bord latéral. Un outil courant tel qu'un tournevis ou autre objet à extrémité plate peut dans ce cas servir à écarter la face d'accolage (4) du support qui est toujours métallique dans le cas des engins de travaux publics et en particulier des engins d'excavation (2). La face d'accolage (4) est préférentiellement aplatie et les éléments de fixation (40, 41) comprennent au moins un aimant (40). Le fait d'utiliser plusieurs aimants (40) permet d'empêcher le glissement du dispositif.

Dans le mode de réalisation de la figure 4B, des cavités ou encoches (41) sont prévues du côté de la face d'accolage (4) pour permettre un positionnement du dispositif détecteur (2) selon une direction privilégiée. De telles encoches de positionnement permettent par exemple (si nécessaire) de se replacer rigoureusement à la même position sur les bras de pelle mécanique. Ces derniers peuvent recevoir une plaque soudée équipé de pions de centrage. Deux cavités au moins ayant des formes ou des localisations différentes peuvent être ainsi utilisées du côté de la face d'accolage (4). Aucun glissement ni mauvais positionnement du dispositif (3) n'est possible avec ce genre de calage en position.

Dans un mode de réalisation préféré de l'invention, le dispositif détecteur de position angulaire (3) est compact et loge les principaux composants sous la coque (5) solidaire de la face d'accolage (4). La source (61) d'alimentation électrique autonome, l'unité de traitement (36) et le module électronique détecteur de position sont ainsi protégés par la coque (5). Comme peut l'apprécier l'homme du métier, le module électronique peut former un circuit capteur (S) dans lequel sont intégrés les éléments transducteurs sensibles au mouvement et l'unité de traitement (36). L'émetteur à interface sans fil peut être localisé partiellement ou complètement en dehors de la coque (5). Pour des questions de robustesse, il est plus avantageux de loger tous les composants (35, S, 36, 60, 61) sous ladite coque (5). Un accès à certains des composants, notamment la batterie et le circuit électronique formant capteur (S), peut être prévu par le dessous, côté face d'accolage (4). La coque (5) peut être montée amovible sur la partie de support incluant la face d'accolage (4).

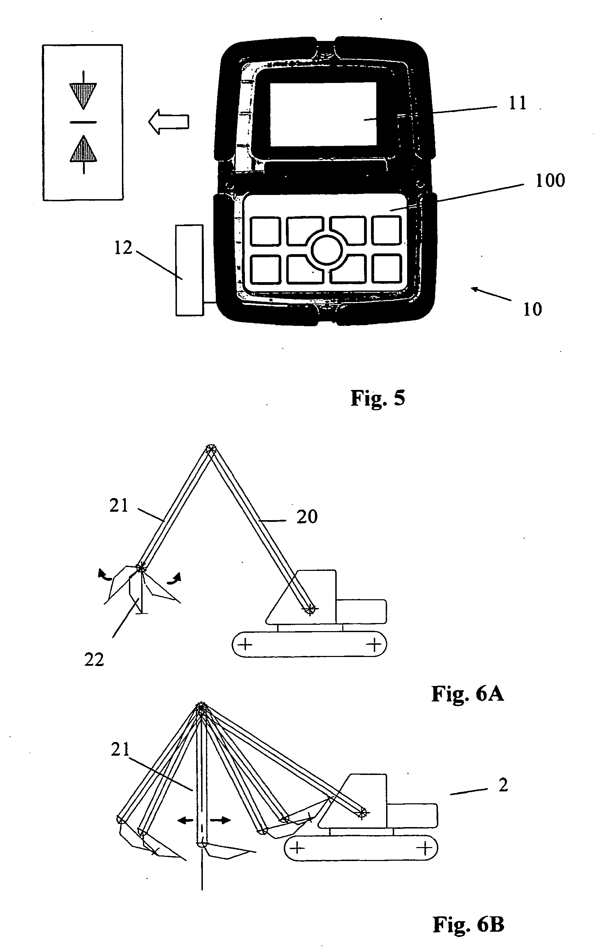

En référence aux figures 1 et 5, les données de position angulaire peuvent être traitées par un appareil de contrôle (10) qui fournit à l'opérateur des indications visuelles facilitant le pilotage de l'outil de travail (généralement un godet). Pour cela, comme illustré aux figures 2 et 3, des dispositifs détecteurs de position angulaire (30, 31, 32) sont placés respectivement sur le bras de support (20), sur le bras de godet (21) et sur le godet (22) de l'engin. Chaque dispositif détecteur (30, 31, 32) dispose d'un module (35) de communication sans fil pour envoyer les informations vers un récepteur sans fil de l'appareil de contrôle (10). Cet appareil (10) peut être alimenté par l'alimentation présente dans la cabine de l'engin (2) d'excavation.

La pose de chaque dispositif détecteur (3) peut être effectuée selon une direction privilégiée de l'organe articulé servant de support au dispositif (3). Les angles (A1, A2, A3) respectifs servant à déterminer la profondeur atteinte par le godet ou outil (22) peuvent ainsi être connus dans la mesure où la position angulaire de chaque capteur (S) par rapport au bras/outil qui le supporte est un paramètre connu. L'axe (A) longitudinal du dispositif détecteur (3) peut par exemple coïncider avec la direction privilégiée (longueur) du bras de support (20), du bras de godet (21) ou de l'outil (22). Les paramètres de position angulaire de fixation de chaque capteur (S) sur son support sont par exemple pris en compte par l'appareil de contrôle (10).

Les capteurs (S) utilisés sont préférentiellement incorporés dans un circuit électronique. Les équipements électroniques pour collecter des données détecter de position angulaire sont par exemples les modules senseurs Memsic MXD 20-20, les modules des constructeurs ST, Analog Devices, Motorola. Ces modules sont des exemples nullement limitatifs d'équipements capteurs (S) de position angulaire pouvant être embarqués dans un dispositif détecteur (3) selon l'invention. Les modules à capteur (S) peuvent consister en des circuits électroniques à gyroscope, avec une sensibilité pouvant atteindre 150 degrés/secondes par exemple (le principe de détection s'appuyant typiquement sur la mesure de la force de Coriolis produite lors d'une rotation du support). Chaque capteur (S) de position angulaire peut être de type capteur accéléromètre. Comme peut l'apprécier l'homme du métier, n'importe quel équipement de mesure de position angulaire adapté peut être embarqué dans un dispositif détecteur (3) selon l'invention.

Le capteur (S) de position angulaire embarqué dans le dispositif (3) fournit des données de position angulaire à l'unité de traitement (36). Le module (35) de communication transfère aussitôt ces données de position angulaire vers l'appareil de contrôle (10), via un émetteur à interface sans fil connecté à l'unité de traitement (36). Ces données de position angulaire sont envoyées à distance dans un signal d'émission (Sg), de préférence radio. L'appareil de contrôle (10) dispose alors de tous les paramètres nécessaires au calcul de la position de l'outil (22) et des données de position relatives aux bras de support (20), au bras de godet (21) et à l'outil (22). La figure 3 illustre la relation entre les angles (A1; A2, A3) par rapport à l'horizontale et la position verticale en profondeur (D) de l'outil (22) de l'engin de travaux. Les angles (A1; A2, A3) illustrés se déduisent des données de position (par exemple par rapport à la verticale) fournies par le capteur (S). Les distances verticales (V1, V2, V3) associées à chacun des organes articulés (20, 21, 22) de l'engin (2) peuvent se calculer comme suit :

$V1 = L_{BOOM} * SIN(A1)$ ; où $L_{BOOM}$ est la longueur du bras de support

$V2 = L_{Dipperstick} * SIN(A1)$ ; où $L_{Dipperstick}$ est la longueur du bras de godet

$V3 = L_{BUCKET} * SIN(A3)$ ; où $L_{BUCKET}$ est la longueur du godet

La distance verticale VC relative au châssis (200) peut être prise en compte. En cas d'inclinaison du châssis, un inclinomètre/capteur analogue ou identique aux dispositifs détecteurs (30, 31, 32) peut être utilisé sur le châssis pour fournir des données représentatives de l'angle d'inclinaison (AC). L'appareil de contrôle (10) obtient une distance VC corrigée.

La distance verticale correspond à la somme V1+V2+V3+VC des distances verticales. Les composantes de cette somme sont des distances relatives : dans l'exemple de la figure 3, la distance V1 est ainsi négative. Une fois la profondeur désirée DR paramétrée, l'appareil de contrôle (10) peut déterminer la différence de profondeur (D) de l'outil (22) ou godet par rapport à la profondeur (DR) de référence :

$$D = V - DR$$

Naturellement une distance horizontale H peut être calculée de façon similaire par l'appareil de contrôle (10) qui dispose des paramètres et des données de position angulaire.

Dans l'exemple des figures 2 et 3, on obtient un système robuste de détermination de la position de l'outil (22), grâce à l'appareil de contrôle (10) recueillant à distance et sans câble les données de position angulaire des dispositifs détecteurs de position (30, 31, 32), répartis chacun sur différentes parties articulées de l'engin de travaux. En référence aux figures 3 et 5, l'appareil de contrôle (10) comprend :

- un récepteur (12) de communication sans fil pour recevoir les signaux d'émission (Sg) envoyés par chacun des dispositifs (3) autonomes,
- une interface utilisateur (100) dotée d'un écran d'affichage, et
- un module de calcul de la position de l'outil (22) par utilisation des données de position angulaire issues de l'ensemble des dispositifs détecteurs (30, 31, 32).

Le module de calcul de l'appareil de contrôle (10) peut comparer la position de l'outil (22) calculée (la distance V donne la profondeur effective atteinte par l'outil (22)) avec la profondeur de référence DR paramétrée via l'interface utilisateur pour déterminer une consigne d'ajustement vertical de l'outil (22). Le module de calcul délivre ainsi un signal représentatif de ladite consigne à destination de l'écran d'affichage. La figure 5 illustre des icônes d'ajustement (flèche vers le bas pour baisser l'outil, trait horizontal pour maintenir la position, et flèche vers le haut pour rehausser l'outil). Une de ces icônes est par exemple sélectionnée et affichée en fonction de la valeur D calculée.

L'appareil de contrôle (10) comporte une mémoire pour stocker le paramètre de profondeur de référence. Le module de calcul permet par exemple de calculer une consigne de mouvement vertical de l'outil (22) par utilisation de données de position angulaire fournies par les trois dispositifs détecteurs (30, 31, 32) et du paramètre de profondeur de référence DR.

Dans la cabine, l'appareil de contrôle (10) peut se présenter sous la forme d'un boîtier compact dotée de touches de commandes et d'un écran LCD ou analogue facilitant notamment les opérations de paramétrage (les fonctions pouvant être affichées). Un afficheur séparé et contrôlé par le boîtier peut être prévu pour indiquer la consigne visuelle. L'utilisateur peut contrôler dans son champ de vison habituel les indications relatives au mouvement de godet à effectuer pour conserver la consigne de profondeur DR. Cet afficheur de cabine peut être situé dans un boîtier qui incorpore l'interface de communication sans fil. La réception ainsi que l'émission radio est gérée par cette interface de communication. L'émission radio en provenance de la cabine peut servir notamment à synchroniser les signaux émis par les dispositifs (30, 31, 32), à donner un identifiant, à demander des statuts comme par exemple le niveau de charge batterie, et pour la maintenance (mise à jour de logiciel embarqué, demande de version, et opérations de suivi similaires).

- Dans le mode de réalisation de la figure 3, cette interface de communication sans fil permet de recevoir des signaux d'émission radio (Sg') d'un récepteur laser. Le bras de support (20) peut être équipé d'un dispositif récepteur laser linéaire (70) permettant de détecter une hauteur d'un plan laser de référence. Ce dispositif récepteur laser linéaire (70) comprend un module de communication sans fil pour envoyer le ou les signaux d'émission (Sg') et ainsi transmettre des données de détection de faisceau laser à l'appareil de contrôle (10). Le dispositif récepteur laser linéaire (70) peut être autonome de la même façon que les dispositifs détecteurs de position angulaire (30, 31, 32) et comprend par exemple :

- au moins une cellule de réception linéaire incluant des photodiodes alignées (récepteur laser linéaire),
- une alimentation par panneau(x) solaire(s) chargeant une batterie,
- un transmetteur radio prévu dans le module de communication sans fil pour envoyer des données par radio, et

- une face d'accolage à aimant(s).

L'appareil de contrôle (10) reçoit les données fournies par le dispositif (70). Ces données sont représentatives de la détection de hauteur du plan laser de référence (pour départ et/ou pour correction de dérives). La linéarité du récepteur laser permet de capter le faisceau sur une plus grande hauteur, et par conséquent de ne pas arrêter le mouvement du bras de support (20) pour la détection. Une photodiode intermédiaire peut être considérée comme un capteur de référence et les photodiodes placées plus haut, respectivement plus bas par rapport à cette référence sont chacune associées à un incrément, respectivement un décrément d'ajustement en hauteur. Alternativement, un récepteur (à bas coût et moins précis) peut disposer simplement d'une cellule non linéaire, avec éventuellement un système de lentille pour augmenter la zone de détection. L'une ou l'autre de ces options peuvent être retenues selon les besoins.

Un des avantages d'utiliser un système de détermination de position à l'aide de dispositifs détecteurs autonomes est de pouvoir rapidement équiper un engin d'excavation (2) et de s'affranchir des problèmes de résistance de câbles. La détection de la position angulaire du bras de pelle mécanique (ou godet) sur lequel le dispositif est placé peut ainsi être réalisée rapidement après la pose des dispositifs (3) par leur face d'accolage (4) à aimants (40). Des méthodes de calcul appropriées peuvent être utilisées pour que, une fois les dispositifs détecteurs (3, 30, 31, 32) positionnés, l'appareil de contrôle (10) puisse déterminer avec précision les angles nécessaires au calcul de profondeur (D).

Un gain de temps considérable peut être gagné, d'une part en posant les dispositifs (30, 31, 32) sans aucune connexion filaire ou vis, et d'autre part en évitant des mesures ou manoeuvres fastidieuses pour installer et paramétrer le système de détermination de position. Les organes articulés (20, 21, 22) peuvent comporter des motifs indicateurs pour délimiter un emplacement où poser le dispositif détecteur (3), par exemple selon un axe longitudinal de l'organe. La forme des dispositifs (3, 30, 31, 32) peut être allongée et/ou comporter une forme en saillie (300) indiquant une direction longitudinale du dispositif (3). L'utilisateur peut ainsi placer la forme saillie dans le sens de la longueur de l'organe articulé (20, 21, 22) servant de support. L'appareil de contrôle (10) peut ainsi estimer rapidement la configuration et le positionnement précis des différents dispositifs détecteurs (30, 31, 32). Dans un mode de réalisation, le module de calcul peut aussi effectuer une correction angulaire pour tenir compte des écarts de positionnement par rapport à une position de référence sur le support. Pour la correction angulaire, l'opérateur peut être simplement amené à déplacer successivement un seul des organes articulés (20, 21, 22) et un calcul qui s'appuie sur les évolutions d'angles permet alors de déterminer la correction à apporter par rapport à une position de référence sur le support porteur du dispositif détecteur (3, 30, 31, 32).

Selon une option, l'identification sur la pelle mécanique de chacun des dispositifs (30, 31, 32) peut être obtenue en commandant des mouvements d'un organe articulé seul. Les dispositifs détecteurs (30, 31, 32) sont placés sans identification sur les organes articulés (20, 21, 22) respectifs de la pelle mécanique (exposés à la lumière leur système de veille radio est activé). Après la pose des dispositifs (30, 31, 32), une phase d'apprentissage peut démarrer. Pour cela, l'opérateur prépare l'appareil de contrôle (10) à l'identification. Sur l'afficheur ou écran (11) de l'appareil de contrôle (10), on donne à l'opérateur une consigne pour effectuer un mouvement de chaque organe (20, 21, 22) seul. Ce type de mouvement est illustré dans les figures 6A (mouvement seul du godet) et 6B (mouvement seul du bras de godet (21). Ainsi, le dispositif (30, 31, 32) dont le capteur (S) subit et détecte un mouvement (supérieur aux vibrations de la machine) est considéré comme celui supporté par l'organe (20, 21, 22) que l'opérateur bouge. Avec ce type d'apprentissage, chaque identifiant envoyé dans le signal d'émission (Sg) est associé de façon spécifique à un unique organe articulé (20, 21, 22).

Un autre mode d'identification de la localisation des dispositifs détecteurs de position angulaire (30, 31, 32) peut être réalisé, par exemple lors d'une sortie d'emballage.

Les dispositifs détecteurs (30, 31, 32) sont stockés à plat et isolés de la lumière par l'emballage. Lors de l'ouverture de l'emballage, les dispositifs détecteurs (30, 31, 32) reçoivent de l'énergie par l'arrivée de lumière et déclenchent alors leur système radio. L'utilisateur (par exemple en suivant un manuel d'instructions) peut préparer l'appareil de contrôle (10) à l'identification de chaque dispositif détecteur (30, 31, 32) un par un, via l'interface d'utilisateur (100). L'utilisateur sort ainsi chacun des dispositifs (31, 32, 33) à capteur (S) et place le dispositif sur la tranche (le capteur (S) accéléromètre ainsi déplacé indique alors une position angulaire qu'il ne peut afficher à plat : le dispositif détecteur peut donc être identifié et un identifiant associé à ce dispositif détecteur peut être créé et/ou mémorisé au niveau de l'appareil de contrôle. Par exemple, le dispositif est associé à ce stade à l'un des organes articulés (20, 21, 22) de l'engin d'excavation (2). L'utilisateur peut placer un repère (étiquette ou autre marque) pour identifier le dispositif (30, 31, 32) à senseur ainsi spécialisé. Il ne reste ensuite qu'à placer chaque dispositif détecteur de position angulaire (30, 31, 32) sur son support correspondant de la pelle mécanique (typiquement : bras de support, bras de godet, godet). Une sécurité logicielle est par exemple prévue dans l'appareil de contrôle (10) pour détecter les possibles erreurs de montage.

Il doit être évident pour les personnes versées dans l'art que la présente invention permet des modes de réalisation sous de nombreuses autres formes spécifiques sans l'éloigner du domaine d'application de l'invention comme revendiqué. En particulier, rien n'empêche d'utiliser un système de détermination de la position d'outil dans le cas d'un engin disposant d'un bras de plus que les trois éléments cités précédemment (bras, bras porte godet, godet). Le principe de calcul reste le même ; il y a simplement un dispositif (3) à capteur en plus.

## Revendications

**1.** Dispositif détecteur de position angulaire (3, 30, 31, 32) pour équiper un organe articulé (20, 21, 22) d'un engin de travaux (2), comportant au moins une face d'accolage (4) dotée d'éléments de fixation (40, 41) permettant de maintenir la face d'accolage (4) accolée contre une surface plane en mouvement de l'organe, un module (35) de communication par ondes électromagnétiques pour envoyer des informations vers un récepteur d'un appareil de contrôle (10) distant, **caractérisé en ce que** le dispositif loge sous au moins une coque (5) ou enveloppe solidaire de la face d'accolage (4) :

- une source (61) d'alimentation électrique autonome,
- une unité de traitement (36),
- un module électronique détecteur de position,

et **en ce que** le module électronique détecteur de position comprend au moins un capteur (S) de position angulaire pour fournir des données de position angulaire à l'unité de traitement (36), le module (35) de communication comportant un émetteur à interface sans fil connecté à l'unité de traitement (36) pour envoyer à distance vers l'appareil de contrôle (10) les données de position angulaire dans un signal d'émission (Sg) ;
et **en ce que** les éléments de fixation (40, 41) de la face d'accolage (4) sont des éléments de fixation amovibles, comprenant au moins un aimant (40), et dépourvus de vis pour être fixés manuellement sans l'aide d'outils.

**2.** Dispositif selon la revendication 1, dans lequel la face d'accolage (4) est aplatie.

**3.** Dispositif selon une des revendications 1 ou 2, dans lequel l'émetteur à interface sans fil du module (35) de communication transmet dans le signal d'émission (Sg) un identifiant propre au dispositif (3, 30, 31, 32).

**4.** Dispositif selon une des revendications 1 à 3, dans lequel la source (61) d'alimentation électrique autonome comprend au moins une batterie chargée par des cellules photovoltaïques.

**5.** Dispositif selon la revendication 4, dans lequel les cellules photovoltaïques sont montées sur au moins un panneau (60) à l'opposé de la face d'accolage (4).

**6.** Dispositif selon une des revendications 1 à 5, dans lequel l'ensemble des composants est embarqué au dos de la face d'accolage (4), les composants et des panneaux (60) solaires associés étant recouverts d'une coque (5) de protection transparente.

**7.** Dispositif selon une des revendications 1 à 6, dans lequel chaque capteur (S) de position angulaire est de type capteur accéléromètre.

**8.** Dispositif selon une des revendications 1 à 7, dans lequel les éléments de fixation (40, 41) de la face d'accolage (4) comprennent des cavités ou encoches (41) de positionnement selon une direction privilégiée.

**9.** Utilisation de dispositifs détecteurs de position angulaire (30, 31, 32) selon la revendication 1 dans n système de détermination de la position d'un outil (22) monté sur un bras articulé (20, 21) d'un engin de travaux (2), comprenant un appareil de contrôle (10), les dispositifs détecteurs (30, 31, 32) étant répartis chacun sur différentes parties articulées de l'engin de travaux, l'appareil de contrôle (10) comprenant :

- un récepteur (12) de communication sans fil pour recevoir le signal d'émission (Sg),
- une interface utilisateur (100) dotée d'un écran d'affichage, et
- un module de calcul d'une position de l'outil (22) par utilisation des données de position angulaire issues de l'ensemble des dispositifs détecteurs (30, 31, 32).

**10.** Utilisation de dispositifs détecteurs selon la revendication 9, dans laquelle l'émetteur à interface sans fil du module de communication de chacun des dispositifs détecteurs (30, 31, 32) transmet dans le signal d'émission (Sg) un identifiant.

**11.** Utilisation de dispositifs détecteurs selon la revendication 9 ou 10, dans laquelle la source d'alimentation électrique autonome de chacun des dispositifs détecteurs (30,31,32) comprend au moins une batterie chargée par des cellules photovoltaïques.

**12.** Utilisation de dispositifs détecteurs selon une des revendications 9 à 11, dans laquelle la face d'accolage (4) de chacun des dispositifs détecteurs (30,31,32) est aplatie.

**13.** Utilisation de dispositifs détecteurs selon une des revendications 9 à 12, dans laquelle le module de calcul compare en outre la position de l'outil (22) calculée avec une profondeur de référence paramétrée via l'interface utilisateur pour déterminer une consigne d'ajustement vertical de l'outil (22), le module de calcul délivrant un signal représentatif de ladite consigne à destination de l'écran d'affichage.

**14.** Utilisation d'un système de détermination de la position d'un outil (22) d'un engin d'excavation (2) comprenant un châssis (200), un bras de support (20) attaché de façon pivotante sur le châssis (200), un bras de godet (21) ayant une première extrémité et une deuxième extrémité, la première extrémité étant attachée de façon pivotante sur le bras de support (20), l'outil de type godet (22) étant attaché de façon pivotante sur la deuxième extrémité du bras de godet (21), et un système actionneur pour actionner, en réponse à des signaux de commande, le bras de support (20), le bras de godet (21) et l'outil (22), **caractérisée en ce que** l'engin comprend :

     - trois dispositifs détecteurs de position angulaire (30, 31, 32) selon la revendication 1, lesdits trois dispositifs détecteurs (30, 31, 32) étant positionnés au moyen des aimants (40) respectivement sur le bras de support (20), le bras de godet (21) et l'outil (22) ;
     - une interface utilisateur (100) pour permettre de commander le système actionneur ; et
     - en liaison avec l'interface utilisateur (100) un appareil de contrôle (10) doté d'un récepteur de communication sans fil pour recevoir des signaux d'émission (Sg) délivrés par les émetteurs des trois dispositifs détecteurs.

**15.** Utilisation d'un système de détermination de la position d'un outil (22) d'un engin selon la revendication 14, dans laquelle l'émetteur à interface sans fil du module de communication de chacun des dispositifs détecteurs (30, 31, 32) transmet dans le signal d'émission (Sg) un identifiant, l'appareil de contrôle (10) comprenant une table de correspondance pour associer à un organe articulé parmi le bras de support (20), le bras de godet (21) et l'outil (22) une position angulaire transmise dans le signal d'émission (Sg), cette association étant établie grâce à l'identifiant de dispositif détecteur transmis avec la position angulaire dans le signal d'émission (Sg).

**16.** Utilisation d'un système de détermination de la position d'un outil (22) d'un engin selon la revendication 14 ou 15, dans laquelle les émetteurs et le récepteur utilisent des ondes radio à une fréquence déterminée.

**17.** Utilisation d'un système de détermination de la position d'un outil (22) d'un engin selon une des revendications 14 à 16, dans laquelle l'appareil de contrôle (10) comprend :

     - une mémoire pour stocker un paramètre de profondeur de référence ;

     - un module de calcul d'une consigne de mouvement vertical de l'outil (22) par utilisation de données de position angulaire fournies par les trois dispositifs détecteurs (30, 31, 32) et du paramètre de profondeur de référence ;
     - une liaison avec un écran d'affichage de l'interface utilisateur pour fournir à cet écran d'affichage le résultat du calcul de consigne.

**18.** Utilisation d'un système de détermination de la position d'un outil (22) d'un engin selon une des revendications 14 à 17, dans laquelle le bras de support (20) ou le dispositif détecteur (30) placé sur le bras de support (20) est équipé d'un dispositif récepteur laser linéaire (70) permettant de détecter un passage du récepteur laser linéaire à une hauteur définie par un plan laser de référence, le dispositif récepteur laser linéaire (70) incluant un module de communication sans fil pour envoyer dans un signal d'émission (Sg') des données de détection de faisceau laser à l'appareil de contrôle (10).

**19.** Utilisation d'un système de détermination de la position d'un outil (22) d'un engin selon la revendication 18, dans laquelle le dispositif récepteur laser linéaire (70) comprend au moins une cellule de réception linéaire incluant des photodiodes alignées.

## Claims

**1.** Angle position detector device (3, 30, 31, 32) for equipping an articulated element (20, 21, 22) of a working machine (2), including at least one attachment face (4) provided with fixing elements (40, 41) which make it possible to keep the attachment face (4) attached against a flat moving surface of the element, a module (35) for communication by electromagnetic waves in order to send information to a receiver of a remote control apparatus (1), **characterised in that** the device is accommodated below at least one shell (5) or casing integral with the attachment face (4):

     - an autonomous electrical power supply source (61),
     - a processing unit (36),
     - an electronic position detector module,

and **in that** the electronic position detector module comprises at least one angular position sensor (S) for supplying angular position data to the processing unit (36), the communication module including a transmitter with a wireless interface connected to the processing unit (36) in order to remotely send the angular position data in a transmitter signal (Sg) to the control apparatus (10);
and **in that** the fixing elements (40, 41) of the attachment face (4) are removable fixing elements, comprising at least one magnet (40), and free of screws for fixing manually without the aid of tools.

2. Device as claimed in Claim 1, wherein the attachment face (4) is flattened.

3. Device as claimed in any one of Claims 1 or 2, wherein the transmitter with a wireless interface of the communication module (35) transmits an identifier belonging to the device (3, 30, 31, 32) in the transmission signal (Sg).

4. Device as claimed in any one of Claims 1 to 3, wherein the autonomous electrical powder supply source (61) comprises at least one battery charged by photovoltaic cells.

5. Device as claimed in Claim 4, wherein the photovoltaic cells are mounted on at least one panel (60) opposite the attachment face (4).

6. Device as claimed in any one of Claims 1 to 5, wherein all of components are embedded on the back of the attachment face (4), the components and associated solar panels (60) joined being covered by a transparent protective shell (5).

7. Device as claimed in any one of Claims 1 to 6, wherein each angular position sensor (S) is of the accelerometer sensor type.

8. Device as claimed in any one of Claims 1 to 7, wherein the fixing elements (40, 41) of the attachment face (4) comprise cavities or recesses (41) for positioning in a preferred direction.

9. Use of angular position detector devices (30, 31,32) as claimed in Claim 1 in a system for determination of the position of a tool (22) mounted on an articulated arm (20, 21) of a working machine (2), comprising a control apparatus (10), the detector devices (30, 31, 32) each being distributed over different articulated parts of the working machine, the control apparatus (10) comprising:

- a wireless communication receiver (12) in order to receive the transmitter signal (Sg),
- a user interface (100) provided with a display screen, and
- a module for calculating a position of the tool (22) by use of the angular position data supplied by all of the detector devices (30, 31, 32).

10. Use of detector device as claimed in Claim 9, wherein the transmitter with a wireless interface of each of the detector devices (30, 31, 32) transmits an identifier in the transmission signal (Sg).

11. Use of detector devices as claimed in Claim 9 or 10, wherein the autonomous electrical power supply source of each of the detector devices (30, 31, 32) comprises at least one battery charged by photovoltaic cells.

12. Use of detector devices as claimed in any one of Claims 9 to 11, wherein attachment face of each of the detector devices (30, 31, 32) is flattened.

13. Use of detector devices as claimed in any one of Claims 9 to 12, wherein the calculation module also compares the calculated position of the tool (22) with a parameterised reference depth via the user interface in order to determine a desired value for vertical adjustment of the tool (22), the calculation module delivering a signal representing the said desired value intended for the display screen.

14. Use of system for determination of the position of a tool (22) of an excavating machine (2) comprising a chassis (200), a supporting arm (20) pivotably attached to the chassis (200), a bucket arm (21) having a first end and a second end, the first end being pivotably attached to the supporting arm (20), the bucket-type tool (22) being pivotably attached to the second end of the bucket arm (21), and an actuator system in order, in response to control signals , to actuate the supporting arm (20), the bucket arm (21) and the tool (22), **characterised in that** the machine comprises:

- three angular position detector devices (30, 31, 32) as claimed in Claim 1, the said three detector devices (30, 31, 32) being positioned by means of magnets (40) respectively on the supporting arm (20), the bucket arm (21) and the tool (22);
- a user interface (100) in order to enable control of the actuator system; and
- in conjunction with the user interface (100) un control apparatus (10) provided d'un receiver of wireless communication in order to receive transmitter signals (Sg) delivered by the transmitters of three detector devices.

15. Use of a system for determination of the position of a tool (22) of a machine as claimed in Claim 14, wherein the transmitter with a wireless interface of the communication module of each of the detector devices (30, 31, 32) transmits an identifier in the transmitter signal (Sg), the control apparatus (10) comprising a correspondence table in order to associate with an articulated element amongst the supporting arm (20), the bucket arm (21) and the tool (22) an angular position transmitted in the transmitter signal (Sg), this association being established by means of the detector device identifier transmitted with the angular position in the transmitter signal (Sg).

16. Use of a system for determination of the position of a tool (22) of a machine as claimed in Claim 14 or 15, wherein the transmitters and the receiver use radio waves at a defined frequency.

17. Use of a system for determination of the position of a tool (22) of a machine as claimed in any one of Claims 14 or 16, wherein the control apparatus (10) comprises:

- a memory in order to store a reference depth parameter;
- a module for calculation of a desired value for vertical movement of the tool (22) by the use of angular position data supplied by the three detector devices (30, 31, 32) and the reference depth parameter;
- a link to a display screen of the user interface in order to supply the result of the desired value calculation to this display screen.

18. Use of a system for determination of the position of a tool (22) of a machine as claimed in any one of Claims 14 to 17, wherein the supporting arm (20) or the detector device (30) placed on the supporting arm (20) is equipped with a linear laser receiver device (70) making it possible to detect a passage of the linear laser receiver at a height defined by a reference laser plane, the linear laser receiver device (70) including a wireless communication module in order to send laser beam detection data in a transmitter signal (Sg') to the control apparatus (10).

19. Use of a system for determination of the position of a tool (22) of a machine as claimed in Claim 18, wherein the linear laser receiver device (70) comprises at least one linear reception cell including aligned photodiodes.


**Patentansprüche**

1. Vorrichtung zum Detektieren einer winkelposition (3, 30, 31, 32) zum Ausstatten eines gelenkig gelagerten Elements (20, 21, 22) einer Arbeitsmaschine (2), aufweisend:

mindestens eine Anschlussseite (4), die mit Befestigungselementen (40, 41) versehen ist, die ermöglichen, die Anschlussseite (4) bei Bewegung des Elements an eine ebene Fläche abgeschlossen zu halten, ein Modul (35) zum Kommunizieren mittels elektromagnetischer Wellen, um Informationen an einen Empfänger einer entfernten Steuervorrichtung (10) zu senden, **dadurch gekennzeichnet,**

**dass** die Vorrichtung unter mindestens einer Schale (5) oder einer Hülle aufgenommen ist, die mit der Anschlussseite (4) einstückig ist,

- eine unabhängige Stromversorgungsquelle (61),
- eine Verarbeitungseinheit (36),
- ein elektronisches Positionsdetektionsmodul,

und **dass** das elektronische Positionsdetektionsmodul mindestens einen Winkelpositionssensor (S) aufweist, um der Verarbeitungseinheit (36) Winkelpositionsdaten zuzuführen, wobei das Kommunikationsmodul (35) einen Sender mit drahtloser Schnittstelle aufweist, der mit der Verarbeitungseinheit (36) verbunden ist, um die Winkelpositionsdaten in einem Sendesignal (Sg) an die Steuervorrichtung (10) fernzuübertragen,
und **dass** die Befestigungselemente (40, 41) der Anschlussseite (4) lösbare Befestigungsmittel sind, die mindestens einen Magneten (40) aufweisen und ohne Schraube vorgesehen sind, um ohne die Hilfe von Werkzeugen von Hand befestigt zu werfen.

2. Vorrichtung gemäß Anspruch 1, wobei die Anschlussseite (4) abgeflacht ist.

3. Vorrichtung gemäß einem der Ansprüche 1 oder 2, wobei der Sender mit drahtloser Schnittstelle des Kommunikationsmoduls (35) in dem Sendesignal (Sg) einen zu der Vorrichtung (3, 30, 31, 32) gehörigen Identifizierer übermittelt.

4. Vorrichtung gemäß einem der Ansprüche 1 bis 3, wobei die unabhängige Stromversorgungsquelle (61) mindestens eine Batterie aufweist, die durch photovoltaische Zellen aufgeladen wird.

5. Vorrichtung gemäß Anspruch 4, wobei die photovoltaischen Zellen an mindestens einem Paneel (60) entgegengesetzt zu der Anschlussseite (4) montiert sind.

6. Vorrichtung gemäß einem der Ansprüche 1 bis 5, wobei die Gesamtheit der Bauteile auf der Rückseite der Befestigungsseite (4) vorgesehen ist, wobei die Bauteile und zugeordnete Solarpaneele (60) von einer durchsichtigen Schutzschale (5) umhüllt sind.

7. Vorrichtung gemäß einem der Ansprüche 1 bis 6, wobei jeder Winkelpositionssensor (S) vom Beschleunigungsmessertyp ist.

8. Vorrichtung gemäß einem der Ansprüche 1 bis 7, wobei die Befestigungselemente (40, 41) der Anschlußseite (4) Hohlräume oder Auskerbungen (41) zum Positionieren entlang einer bevorzugten Richtung aufweisen.

9. Verwendung von Winkelpositionsdetektionsvorrichtungen (30, 31, 32) gemäß Anspruch 1 in einem System zum Bestimmen der Position eines Werkzeugs (22), das an einem Gelenkarm (20, 21) einer Arbeitsmaschine montiert ist, aufweisend eine Steuervorrichtung (10), wobei die Detektionsvorrichtungen (30, 31, 32) jeweils auf verschiedene Gelenkabschnitte der Arbeitsmaschine verteilt sind, wobei die Steuervorrichtung (10) aufweist:

   - einen Empfänger (12) zur drahtlosen Kommunikation, um das Sendesignal (Sg) zu empfangen,
   - eine Benutzerschnittstelle (100), die mit einem Anzeigebildschirm ausgestattet ist, und
   - ein Modul zum Berechnen einer Position des Werkzeugs (22) durch Nutzung der Winkelpositionsdaten, die von der Gesamtheit der Detektionsvorrichtungen (30, 31, 32) ausgegeben werden.

10. Verwendung von Detektionsvorrichtungen gemäß Anspruch 9, wobei der Sender mit drahtloser Schnittstelle des Kommunikationsmoduls von jeder der Detektionsvorrichtungen (30, 31, 32) in dem Sendesignal (Sg) einen Identifizieren übermittelt.

11. Verwendung von Detektionsvorrichtungen gemäß Anspruch 9 oder 10, wobei die unabhängige Stromversorgungsquelle von jeder der Detektionsvorrichtungen (30, 31, 32) mindestens eine durch photovoltaische Zellen geladene Batterie aufweiset.

12. Verwendung von Detektionsvorrichtungen gemäß einem der Ansprüche 9 bis 11, wobei die Anschlussseite von jeder der Detektionsvorrichtungen (30, 31, 32) abgeflacht ist.

13. Verwendung von Detektionsvorrichtungen gemäß einem der Ansprüche 9 bis 12, wobei das Berechnungsmodul ferner die berechnete Position des Werkzeugs (22) mit einer über die Benutzerschnittstelle parametrisierten Referenztiefe vergleicht, um einen Sollwert für die vertikale Justierung des Werkzeugs (22) zu bestimmen, wobei das Berechnungsmodul an den Anzeigebildschirm ein Signal ausgibt, das für den Sollwert repräsentativ ist.

14. Verwendung eines Systems zum Bestimmen der Position eines Werkzeugs (22) einer Baggermaschine (2), die aufweist: ein Fahrgestell (200), einen Stützarm (20), der schwenkbar an dem Fahrgestell (200) angebracht ist, einen Schaufelarm (21), der ein erstes Ende und ein zweites Ende aufweist, wobei das erste Ende schwenkbar an dem Stützarm (20) angebracht ist, wobei das Werkzeug vom Schaufeltyp (22) schwenkbar an dem zweiten Ende des Schaufelarms (21) angebracht ist, und ein Betätigungssystem zum Betätigen des Stützarms (20), des Schaufelarms (21) und des Werkzeugs (22) in Antwort auf Steuersignale, **dadurch gekennzeichnet, dass** die Maschine aufweist:

   - drei Winkelpositionsdetektionsvorrichtungen (30, 31, 32) gemäß Anspruch 1, wobei die drei Detektionsvorrichtungen (30, 31, 32) mittels der Magneten (40) jeweils an dem Stützarm (20), dem Schaufelarm (21) und dem Werkzeug (22) positioniert sind,
   - eine Benutzerschnittstelle (100), um ein Steuern des Betätigungssystems zu ermöglichen, und
   - in Verbindung mit der Benutzerschnittstelle (100) eine Steuervorrichtung (10), die mit einem drahtlosen Kommunikationsempfänger ausgestattet ist, um Sendesignale (Sg) zu empfangen, die von den Sendern der drei Detektionsvorrichtungen ausgegeben werden,

15. Verwendung eines Systems zum Bestimmen der Position eines Werkzeugs (22) einer Maschine gemäß Anspruch 14, wobei der Sender mit drahtloser Schnittstelle des Kommunikationsmoduls jeder der Detektionsvorrichtungen (30, 31, 32) in dem Sendesignal (Sg) einen Identifizieren übermittelt, wobei die Steuervorrichtung (10) eine Korrespondenztabelle aufweist, um einem Gelenkelement von dem Stützarm (20), dem Schaufelarm (21) und dem Werkzeug (22) eine Winkelposition zuzuordnen, die in dem Sendesignal (Sg) übermittelt wird, wobei die Zuordnung mit Hilfe des identifizierers der Detektionsvorrichtung erfolgt, der mit der Winkelposition in dem Sendesignal (Sg) übermittelt wird.

16. Verwendung eines Systems zum Bestimmen der Position eines Werkzeugs (22) einer Maschine gemäß Anspruch 14 oder 15, wobei die Sender und der Empfänger Radiowellen mit einer bestimmten Frequenz verwenden.

17. Verwendung eines Systems zum Bestimmen der Position eines Werkzeugs (22) einer Maschine gemäß einem der Ansprüche 14 bis 16, wobei die Steuervorrichtung (10) aufweist:

   - einen Speicher, um einen Referenztiefenparameter zu speichern,
   - ein Modul zum Berechnen eines Sollwerts für eine vertikale Bewegung des Werkzeugs (22) unter Verwerdung von Winkelpositionsdaten, die von den drei Detektionsvorrichtungen (30, 31, 32) bereitgestellt werden, und des Referenztiefenparameters,

- eine Verbindung mit dem Anzeigebildschirm der Benutzerschnittstelle, um dem Anzeigebildschirm das Ergebnis der Berechnung des Sollwertes zu übermitteln.

18. Verwendung eines Systems zum Bestimmen der Position eines Werkzeugs (22) einer Maschine gemäß einem der Ansprüche 14 bis 17, wobei der Stützarm (20) oder die Detektionsvorrichtung (30), die an dem Stützarm (20) positioniert ist, mit einer Linear-Laser-Empfänger-Vorrichtung (70) ausgestattet ist, die ermöglicht, ein Passieren des Linear-Laser-Empfängers auf einer durch eine Referenzlaserebene definierten Höhe zu detektieren, wobei die Linear-Laser-Empfänger-Vorrichtung (70) ein drahtloses Kommunikationsmodul aufweist, um in einem Sendesignal (Sg') Daten bezüglich der Laserstrahldetektion an die Steuervorrichtung (10) zu senden.

19. Verwerdung eines Systems zum Bestimmen der Position eines Werkzeugs (22) einer Maschine gemäß Anspruch 18, wobei die Linear-Laser-Empfänger-Vorrichtung (70) mindestens eine lineare Empfangszelle aufweist, die ausgerichtete Photodioden aufweist.

**Fig. 1**

**Fig. 2**

**Fig. 3**

**Fig. 4B**

**Fig. 4A**

**Fig. 5**

**Fig. 6A**

**Fig. 6B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4491927 A
- US 5848485 A
- US 6336077 B
- US 6609315 B
- FR 2620148
- US 2006243180 A
- US 2006085118 A
- DE 4335479
- US 20040139803 A